# EUROPÄISCHE PATENTSCHRIFT

(11) **EP 4 194 307 B1**
(45) Veröffentlichungstag und Bekanntmachung des Hinweises auf die Patenterteilung: **19.03.2025**
(21) Anmeldenummer: 22211374.8
(22) Anmeldetag: 05.12.2022
(51) Int. Cl.: B61D 23/02

(54) **TRITTSTUFEN-DICHTUNGS-BAUGRUPPE FÜR EIN TRITTSYSTEM EINES FAHRZEUGS**
STEP SEAL ASSEMBLY FOR A STEP SYSTEM OF A VEHICLE
ENSEMBLE JOINT DE MARCHEPIED POUR UN SYSTÈME DE MARCHEPIED D'UN VÉHICULE

(30) Priorität: 10.12.2021 DE 202021106746 U
(43) Veröffentlichungstag der Anmeldung: 14.06.2023
(73) Patentinhaber: Bode - Die Tür GmbH, 34123 Kassel (DE)
(72) Erfinder: Arend, Ulrich, 34576 Homburg (DE); Theis, Christoph, 34537 Bad Wildungen (DE); Cimmino, Marco, 37139 Adelebsen (DE)
(74) Vertreter: Patentanwälte Bauer Vorberg Kayser

(56) Entgegenhaltungen:
- EP-B1- 3 666 619
- CN-U- 202 138 388
- US-A1- 2021 331 715

## Beschreibung

Die vorliegende Erfindung betrifft eine modulare Trittstufen-Dichtungs-Baugruppe für ein in einem Fahrzeug, insbesondere Schienenfahrzeug, implementiertes Trittsystem, umfassend
- ein Trittstufenmodul, welches unter Einsatz einer Antriebseinheit entlang einer Bewegungsachse von einer eingefahrenen Stellung in Richtung einer ausgefahrenen Stellung bewegbar ist und umgekehrt, wobei das Trittstufenmodul eine Trittfläche aufweist, die sich in einer parallel zur Bewegungsachse ausgerichteten Trittflächenebene erstreckt, und wobei das Trittstufenmodul an einem nach fahrzeugaußen gerichteten, vorderen Ende eine Trittstufenmodul-Vorderkante aufweist,
- eine Dichtleiste, die an der Trittstufenmodul-Vorderkante befestigt ist und sich entlang der Trittstufenmodul-Vorderkante im Wesentlichen in einer Dichtleistenebene erstreckt, wobei die Dichtleiste und das Trittstufenmodul senkrecht zur Bewegungsachse eine vertikale Baugruppenhöhe festlegen, und wobei die Dichtleiste und Trittfläche in einem Winkel zueinander angeordnet sind.

Trittsysteme mit zwischen einer eingefahrenen Stellung und ausgefahrenen Stellung bewegbaren Trittstufenmodulen (z. B. Trittplatten) kommen insbesondere bei Fahrzeugen zur Personenbeförderung zum Einsatz, z. B. im Bereich des öffentlichen Personenverkehrs. Infrage kommt beispielsweise eine Verwendung bei Straßenfahrzeugen (z. B. Bussen) oder Schienenfahrzeugen (z. B. Straßenbahnen, U-Bahnen, Trams, Nah- und Fernverkehrszügen, Hochgeschwindigkeitszügen etc.). Trittsysteme werden grundsätzlich zur Vereinfachung des Ein- und Aussteigens in ein Fahrzeug verwendet, sie dienen also als Zu- und Ausstiegshilfe. Während eines Halts eines Fahrzeugs (z. B.) an einem Haltesteig, beispielsweise einem Bahnsteig oder Bussteig, befindet sich das Fahrzeug in einer Ruheposition, sodass die Fahrgäste in das Fahrzeug eintreten bzw. das Fahrzeug verlassen können. Dabei ist es nahezu unvermeidlich, dass im Türbereich zwischen einer Fahrzeugaußenseite und dem Haltesteig ein Spalt überbrückt werden muss. Anderenfalls würde es unweigerlich zu einem Materialkontakt zwischen der Fahrzeugaußenseite und dem Haltesteig kommen, was zu einer Beschädigung des Fahrzeugs führen könnte, beispielsweise in Form von Blech- oder Lackschäden.

Ist ein solcher Spalt zu groß, kann dies eine Gefahr bzw. Beeinträchtigung für die Fahrgäste beim Ein- und Aussteigen in das Fahrzeug bzw. aus dem Fahrzeug darstellen. Entsprechend stellen Trittsysteme, deren Trittstufenmodul im Ruhezustand des Fahrzeugs in Richtung des Haltesteigs ausgefahren oder ausgeklappt werden, eine Möglichkeit dar, die Spaltgröße zwischen Fahrzeug und Haltesteig bzw. Bahnsteig zu reduzieren. Ein solches Trittsystem kann beispielsweise in Form einer Trittplatte oder Trittstufe ausgebildet sein und nimmt beim Zu- oder Aussteigen von Fahrgästen die Gewichtskraft der Fahrgäste auf, wird also trittbelastet.

Im Kontext der hier beschriebenen Erfindung kann unter einem "Einfahren" und "Ausfahren" des Trittstufenmoduls eine Linearbewegung, eine Klapp- oder Schwenkbewegung oder eine kombinierten Linear- und Schwenkbewegung verstanden werden. Eine eingefahrene Stellung kann also ohne weiteres auch eine eingeklappte oder eingeschwenkte Stellung des Trittstufenmoduls meinen.

Auch im Falle eines Fahrzeughalts an einer Stelle ohne eigens vorgesehenen Haltesteig (z. B. im Bereich eines Gehwegs) ist häufig ein Spalt und/oder eine Höhendifferenz zu überwinden. Hier kann ein Trittsystem (samt eines bewegbaren Trittstufenmoduls) den Ein- und Ausstieg in das Fahrzeug erleichtern. Gar im Falle eines Halts des Fahrzeugs auf ebenem Untergrund kann ein Trittsystem zumindest zur Überwindung einer Höhendifferenz zwischen dem ebenen Untergrund und dem Boden des Fahrgastraums dienen, dies gilt umso mehr für Fahrgäste mit körperlicher Beeinträchtigung, beispielsweise Rollstuhlfahrer. Hier kann die Trittstufenmodul als Rampe dienen.

Um eine ausreichende Trittsicherheit für zu- oder aussteigende Fahrgäste zu gewährleisten, sowie eine möglichst lange Lebensdauer des Trittsystems bei Dauernutzung zu ermöglichen, ist erforderlich, dass das Trittsystem eine ausreichende mechanische Stabilität aufweist. Insbesondere eignen sich dazu Trittsysteme mit Trittplatten oder Trittflächen aus Metall. Des Weiteren kann die Trittfläche mit Strukturen oder Matten versehen sein, die einen Anti-Rutscheffekt ausüben und die Rutschgefahr für den Fahrgast beim Ein- und Aussteigen reduzieren.

Die Druckschriften US 2021/331715 A1, CN 202 138 388 U und EP 3 666 619 B1 zeigen Trittstufen-Dichtungs-Baugruppen aus dem Stand der Technik.

Aufgrund variierender Kundenwünsche bzw. baulichen Gegebenheiten (z. B. zur Verfügung stehendem Bauraum) ist es aus dem Stand der Technik bekannt, Trittsysteme unter Berücksichtigung spezifischer Kundenanforderungen kundenspezifisch zu fertigen. Trittsysteme, die sich in Bezug auf ausgewählte Systemvariablen oder Systemgrößen flexibel anpassen lassen (ohne gesondert kundenspezifisch gefertigt zu werden) sind aus dem Stand der Technik nicht bzw. nur unzureichend bekannt.

In der Regel schließen Trittsysteme nach fahrzeugaußen mit einer an die Trittstufenmodul-Vorderkante anschließenden Dichtleiste ab. Diese verhindert einen ungewünschten Schmutz- und Feuchtigkeitseintrag in die Mechanik und Elektronik des Trittsystems. Gemeinsam mit dem Trittstufenmodul definiert die Dichtleiste die Baugruppenhöhe des Trittsystems. Je nach baulicher Gegebenheit oder Kundenanforderung kann es jedoch erforderlich sein, bestimmte bauliche Parameter wie die Baugruppenhöhe des Trittsystems oder einen zwischen Dichtleiste und Trittstufenmodul vorliegenden Winkel flexibel einstellen zu können oder ein bereits gefertigtes Trittsystem an unterschiedliche Kundenanforderungen anzupassen (nach Art eines Modulbaukastens).

Somit liegt der vorliegenden Erfindung die Aufgabe zugrunde, eine Trittstufen-Dichtungs-Baugruppe bereitzustellen, die sich flexibel an unterschiedliche Kundenanforderungen anpassen lässt.

Zur Lösung dieser Aufgabe wird eine Trittstufen-Dichtungs-Baugruppe mit den Merkmalen des Anspruchs 1 vorgeschlagen.

Die Beschreibung offenbart besondere Ausführungsformen der Erfindung insbesondere im Zusammenhang mit den Figuren**.**

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Demgemäß betrifft die Erfindung eine modulare Trittstufen-Dichtungs-Baugruppe für ein in einem Fahrzeug, insbesondere Schienenfahrzeug, implementiertes Trittsystem, umfassend
- ein Trittstufenmodul, welches unter Einsatz einer Antriebseinheit entlang einer Bewegungsachse von einer eingefahrenen Stellung in Richtung einer ausgefahrenen Stellung bewegbar ist und umgekehrt, wobei das Trittstufenmodul eine Trittfläche aufweist, die sich in einer parallel zur Bewegungsachse ausgerichteten Trittflächenebene erstreckt, und wobei das Trittstufenmodul an einem nach fahrzeugaußen gerichteten, vorderen Ende eine Trittstufenmodul-Vorderkante aufweist,
- eine Dichtleiste, die an der Trittstufenmodul-Vorderkante befestigt ist und sich entlang der Trittstufenmodul-Vorderkante im Wesentlichen in einer Dichtleistenebene erstreckt, wobei die Dichtleiste und das Trittstufenmodul senkrecht zur Bewegungsachse eine vertikale Baugruppenhöhe festlegen, und wobei die Dichtleiste und Trittfläche in einem Winkel zueinander angeordnet sind.

Die Baugruppe zeichnet sich dadurch aus, dass die Baugruppenhöhe sowie der Winkel zwischen Dichtleiste und Trittfläche über eine Modulmechanik einstellbar sind. Dabei ist die einstellbare Baugruppenhöhe unmittelbar mit dem Winkel zwischen Dichtleiste und Trittfläche verknüpft. Die Modulmechanik kann mehrere Komponenten umfassen, die jeweils in ihrer Größe (Länge, Breite) anpassbar sein können und mit der Trittstufen-Dichtungs-Baugruppe (trotz unterschiedlicher Größe) kompatibel sein können. Auch über eine Größenvariation jener der Modulmechanik zugehörigen Komponenten lassen sich unterschiedliche Baugruppenhöhen und/oder Winkel zwischen Dichtleiste und Trittfläche bereitstellen. Bei dem erwähnten Trittstufenmodul kann es sich um eine Trittplatte oder um eine Anordnung mit einer Trittstufe (Einzeltrittstufe oder Doppeltrittstufe) handeln.

Das Trittstufenmodul kann als Schiebetritt, Klapptritt oder als Rampe ausgeführt sein. Die erwähnte Dichtleiste kann vollständig oder teilweise aus Metall, Kunststoff oder Gummi gefertigt sein. Auch kann die Dichtleiste aus einem Materialverbund mehrerer der vorgenannten Materialien gefertigt sein. Das Trittstufenmodul kann vorzugsweise aus Metall gefertigt sein, insbesondere um erforderlichen Stabilitätseigenschaften (Stichwort: Trittbelastbarkeit) gerecht zu werden.

Nachfolgend seien weitere Ausgestaltungen der Baugruppe beschrieben. Die nachfolgende Beschreibung inkludiert jene in den Unteransprüchen angegebenen Ausgestaltungsmerkmale, ist jedoch nicht auf diese beschränkt.

Nach einer ersten Ausgestaltung einer mit der Erfindung vorgeschlagenen Baugruppe kann vorgesehen sein, dass die Modulmechanik ein erstes Justierglied und ein zweites Justierglied umfasst. Das erste Justierglied kann dabei mechanisch unmittelbar mit der Dichtleiste verbunden sein, sodass die Stellung (Winkel) der Dichtleiste unmittelbar zur Stellung des ersten Justierglieds korrespondiert (insbesondere in Bezug auf eine Winkelstellung zur Trittfläche). Das erste Justierglied kann (zumindest abschnittsweise) flächig an der Dichtleiste (einer nach fahrzeuginnen gerichteten Seite der Dichtleiste) anliegen. Ferner kann das erste Justierglied in einer Variante unmittelbar die Dichtleiste bereitstellen bzw. ausbilden. Das erste und zweite Justierglied stellen Modulkomponenten bereit, die in unterschiedlichen Größen (z. B. Länge oder Breite) herstellbar und miteinander - sowie mit der beschriebenen Baugruppe - kombinierbar sind. Dies ermöglicht beispielsweise eine flexible Einstellung der Baugruppenhöhe sowie eines zwischen Trittfläche und Dichtleiste vorliegenden Winkels. Ein solches modulares System vermeidet eine bei Kundenwunschvariation notwendige Einzelfertigung bestimmter Komponenten oder des gesamten Trittsystems, sondern eröffnet den Rückgriff auf unterschiedliche Modulkomponenten, die miteinander kompatibel sind. Ein solches modulartiges Baukastensystem ist wirtschaftlicher, verringert Fertigungskosten und reduziert Wartezeiten bei der Fertigung.

Nach einer weiteren Ausgestaltung einer mit der Erfindung vorgeschlagenen Baugruppe kann vorgesehen sein, dass das erste Justierglied an einem ersten Ende einen ersten gekröpften Befestigungswulst und an einem dem ersten Ende gegenüberliegenden zweiten Ende eine Aufnahmetasche aufweist, wobei zwischen dem ersten Ende und dem zweiten Ende ein zweiter gekröpfter Befestigungswulst angeordnet ist. Der genannte erste- und zweite gekröpfte Befestigungswulst dient der Anbindung (Befestigung) des ersten Justierelements an dem Trittstufenmodul, welches zu den Wulsten korrespondierende Aufnahmen aufweist. Die Anbindung/Befestigung erfolgt vorzugsweise im Form- und Kraftschluss, ggf. im Presssitz (nach Art eines Schlüssel-Schloss Prinzips). Die Wulste und/oder das erste Justierelement können aus Metall, Kunststoff oder Gummi gefertigt sein. Das erste Justierelement kann ein ein- oder mehrteiliges Bauteil sein, welches aus einem oder mehreren Material(ien) gefertigt sein kann. Beispielsweise können die Wulste (oder einer der Wulste) an das erste Justierglied (bzw. einen Grundkörper des Justierelements aus Metall) anvulkanisiert sein. Die Aufnahmetasche kann der Anbindung des ersten Justierelements an die Dichtleiste dienen, die einen zugehörigen Dichtleisten-Wulst aufweisen kann. Der Dichtleisten-Wulst kann (z. B. im Presssitz) form- und kraftschlüssig in der Aufnahmetasche aufgenommen werden. Insbesondere kann der Dichtleisten-Wulst an einem unteren (innenseitigen) Ende der Dichtleiste angeordnet sein, während die Dichtleiste mit einem an ihrem oberen Ende (ebenfalls innenseitigen) Befestigungswulst in einer weiteren (ggf. sacklochartig ausgebildeten) Aufnahme befestigbar ist. Auch dies kann im Pressitz erfolgen. Der obere Befestigungswulst kann ebenfalls aus Gummi gefertigt sein.

Nach einer weiteren Ausgestaltung einer mit der Erfindung vorgeschlagenen Baugruppe kann vorgesehen sein, dass der erste und zweite gekröpfte Befestigungswulst ausgehend von einer ersten Seite des ersten Justierglieds vorspringen, dass die Aufnahmetasche ebenfalls ausgehend von der ersten Seite vorspringt, und dass die Aufnahmetasche in Richtung einer der ersten Seite gegenüberliegenden zweiten Seite des ersten Justierglieds zumindest teilweise geöffnet ist. Der erste und zweite gekröpfte Befestigungswulst sind also in Bezug auf eine der ersten Seite zugehörigen Oberfläche erhaben (Vorsprung). Die Aufnahmetasche kann im Querschnitt beispielsweise eine U-, C oder Kreisform aufweisen. Ferner kann die Aufnahmetasche je nach Art einen sacklochartigen Querschnitt aufweisen.

Nach einer weiteren Ausgestaltung einer mit der Erfindung vorgeschlagenen Baugruppe kann vorgesehen sein, dass an dem ersten gekröpften Befestigungswulst eine Mehrzahl von Rastnasen, insbesondere zwei Rastnasen, ausgebildet sind. Die Rastnasen können aus demselben Material wie der erste gekröpfte Befestigungswulst gefertigt sein. Auch können die Rastnasen aus einem anderen Material wie der Befestigungswulst gefertigt sein. Der erste gekröpfte Befestigungswulst kann - wie der zweite gekröpfte Befestigungswulst - eine zumindest teilweise kreisförmige Querschnittsform aufweisen. Die Rastnasen erstrecken sich von einer Oberfläche des ersten gekröpften Befestigungswulstes radial nach außen.

Nach einer weiteren Ausgestaltung einer mit der Erfindung vorgeschlagenen Baugruppe kann vorgesehen sein, dass an einer der Trittflächenebene abgewandten Unterseite des Trittstufenmoduls eine erste Befestigungswulst-Aufnahme zur Aufnahme des ersten gekröpften Befestigungswulstes ausgebildet ist, wobei die Aufnahme eine Mehrzahl von Rastaufnahmen, insbesondere drei Rastaufnahmen, zur Aufnahme der Mehrzahl von Rastnasen, insbesondere zwei Rastnasen aufweist, sodass das erste Justierglied in Bezug zur ersten Befestigungswulst-Aufnahme eine Mehrzahl von Winkelstellungen, insbesondere zwei Winkelstellungen, einnehmen kann. In einer besonderen Ausführungsform können in der ersten Befestigungswulst-Aufnahme drei Rastaufnahmen vorgesehen sein, während an dem ersten gekröpften Befestigungswulst lediglich zwei Rastnasen vorgesehen sind. Daher kann der erste gekröpfte Befestigungswulst zwei Stellungen in der Befestigungswulst-Aufnahme einnehmen. Angenommen die nebeneinander liegenden Rastaufnahmen seien mit den Ziffern 1, 2 und 3 bezeichnet, so können mit an dieser Stelle A und B bezeichneten Rastnasen entweder in die Rastaufnahmen 1, 2 oder 2, 3 eingreifen, also zwei Stellungen einnehmen. Die Befestigungswulst-Aufnahme nimmt somit den ersten gekröpften Befestigungswulst auf, die Rastnasen greifen in die Rastaufnahmen ein. Der erste gekröpfte Befestigungswulst lässt sich vorzugsweise im Presssitz in der Befestigungswulst-Aufnahme anordnen.

Nach einer weiteren Ausgestaltung einer mit der Erfindung vorgeschlagenen Baugruppe kann vorgesehen sein, dass beabstandet zur ersten Befestigungswulst-Aufnahme, insbesondere in Richtung nach fahrzeuginnen, eine Gruppe von in Bezug zur Bewegungsachse hintereinander angeordneten zweiten Befestigungswulst-Aufnahmen, insbesondere drei zweiten Befestigungswulst-Aufnahmen, ausgebildet ist. Die zweiten Befestigungswulst-Aufnahmen können in einem konstanten oder variierenden Abstand zueinander angeordnet sein.

Nach einer weiteren Ausgestaltung einer mit der Erfindung vorgeschlagenen Baugruppe kann vorgesehen sein, dass das zweite Justierglied an einem ersten Ende einen wulstartigen Flansch und einem dem ersten Ende gegenüberliegenden zweiten Ende einen Aufnahmeabschnitt aufweist. Die zweiten Befestigungswulst-Aufnahmen sind vorzugsweise in ihrer Geometrie bzw. im Querschnitt an die Form des wulstartigen Flansches angepasst. Auch dieser lässt sich - vorzugsweise- im Presssitz in einer der zweiten Befestigungswulst-Aufnahmen anordnen. Je nachdem in welcher der drei zweiten Befestigungswulst-Aufnahmen der wulstartige Flansch des zweiten Justierglieds angeordnet wird, kann darüber der Winkel des ersten Justierglieds (und damit der Dichtleiste) zur Trittfläche eingestellt werden. Als mögliche, aber nicht ausschließliche Winkel sind 90°, 80°, 70°, 60°, 50° oder 40° zu nennen. Auch zwischen diesen Winkelwerten liegende Winkel können zwischen erstem Justierglied und Trittfläche vorliegen. Auch sind über die unterschiedlichen zweiten Befestigungswulst-Aufnahmen unterschiedliche Längen des ersten und zweiten Justierglieds einsetzbar.

Wie erwähnt, kann somit nach einer weiteren Ausgestaltung einer mit der Erfindung vorgeschlagenen Baugruppe vorgesehen sein, dass der wulstartige Flansch des zweiten Justierglieds in einer der zweiten Befestigungswulst-Aufnahmen unter Formschluss aufnehmbar ist, wobei der zweite gekröpfte Befestigungswulst des ersten Justierglieds unter Formschluss im Aufnahmeabschnitt des zweiten Justierglieds aufnehmbar ist. Bei dem genannten Formschluss kann es sich um eine form- und kraftschlüssige Verbindung (z. B. einen Presssitz) handeln. Die Ankopplung des zweiten gekröpften Befestigungswulstes an das zweite Justierglied über den Aufnahmeabschnitt kann eine bewegliche Schwenklagerung beinhalten, d. h. das zweite Justierglied kann gegenüber dem ersten Justierglied (sofern der wulstartige Flansch nicht in einer der zweiten Befestigungswulst-Aufnahmen angeordnet ist) schwenkbar sein.

Nach einer weiteren Ausgestaltung einer mit der Erfindung vorgeschlagenen Baugruppe kann vorgesehen sein, dass die an dem ersten Justierglied ausgebildete Aufnahmetasche zur formschlüssigen Aufnahme eines an der Dichtleiste ausgebildeten Dichtleisten-Wulstes ausgebildet ist. Auch hier kann unter der formschlüssigen Aufnahme eine Aufnahme auf Basis eines Form- und Kraftschlusses (z. B. eines Presssitzes) verstanden werden. Durch eine solche Verbindung zwischen Dichtleiste und erstem Justierglied kann die Stellung der Dichtleiste - in Abhängigkeit der Stellung des ersten Justierglieds - eingestellt werden. Der Dichtleistenwulst kann eine zur Form der Aufnahmetasche korrespondierende Form aufweisen, insbesondere in Bezug auf den Querschnitt der Aufnahmetasche.

Nach einer weiteren Ausgestaltung einer mit der Erfindung vorgeschlagenen Baugruppe kann vorgesehen sein, dass das erste und/oder zweite Justierglied nach Art eines Gestänges ausgebildet ist. Dies kann bedeuten, dass das erste und/oder zweite Justierglied jeweils einen nach Art eines Gestänges ausgebildeten Grundkörper aufweisen können.

Nach einer weiteren Ausgestaltung einer mit der Erfindung vorgeschlagenen Baugruppe kann vorgesehen sein, dass sich das erste und/oder zweite Justierglied parallel und entlang der Dichtleiste erstrecken. Es kann auch vorgesehen sein, dass sich das erste Justierglied parallel und entlang der Dichtleiste erstreckt, während das zweite Justierglied nach Art eines Gestänges ausgebildet ist. Ferner kann vorgesehen sein, dass sich das zweite Justierglied parallel und entlang der Dichtleiste erstreckt, während das erste Justierglied nach Art eines Gestänges ausgebildet ist. Zur Bereitstellung eines modularen Systems können das erste und zweite Justierglied in unterschiedlichen Längen gefertigt, vorgehalten und verwendet werden.

Nach einer weiteren Ausgestaltung einer mit der Erfindung vorgeschlagenen Baugruppe kann vorgesehen sein, dass die erste Befestigungswulst-Aufnahme in Form einer Aufnahme-Nut ausgebildet ist, die sich parallel und in einer Richtung entlang der Trittstufenmodul-Vorderkante erstreckt, und dass sich der erste gekröpfte Befestigungswulst des ersten Justierglieds parallel und in einer Richtung entlang der Trittstufenmodul-Vorderkante erstreckt. Eine solche Ausgestaltung kann für eine in besonderem Maße mechanisch stabile Konstruktion der beteiligten Bauteilkomponenten sorgen, was die Lebensdauer des Systems erhöhen kann.

Nach einer weiteren Ausgestaltung einer mit der Erfindung vorgeschlagenen Baugruppe kann vorgesehen sein, dass die zweiten Befestigungswulst-Aufnahmen jeweils in Form von Aufnahme-Nuten ausgebildet sind, die sich parallel und in einer Richtung entlang der Trittstufenmodul-Vorderkante erstrecken, und dass sich der wulstartige Flansch des zweiten Justierglieds parallel und in einer Richtung entlang der Trittstufenmodul-Vorderkante erstreckt. Auch diese Ausgestaltung kann eine in besonderem Maße mechanisch stabile Konstruktion der beteiligten Bauteilkomponenten bereitstellen, was die Lebensdauer des Systems erhöhen kann.

Nach einer weiteren Ausgestaltung einer mit der Erfindung vorgeschlagenen Baugruppe kann vorgesehen sein, dass die Aufnahmetasche des ersten Justierglieds in Form einer Aufnahme-Nut ausgebildet ist, die sich parallel und in einer Richtung entlang der Trittstufenmodul-Vorderkante erstreckt, und dass sich der Dichtleisten-Wulst parallel und in einer Richtung entlang der Trittstufenmodul-Vorderkante erstreckt. Auch diese Ausgestaltung kann eine in besonderem Maße mechanisch stabile Konstruktion der beteiligten Bauteilkomponenten bereitstellen, was die Lebensdauer des Systems erhöhen kann.

Nach einer weiteren Ausgestaltung einer mit der Erfindung vorgeschlagenen Baugruppe kann vorgesehen sein, dass der Aufnahmeabschnitt des zweiten Justierglieds in Form einer Aufnahme-Nut ausgebildet ist, die sich parallel und in einer Richtung entlang der Trittstufenmodul-Vorderkante erstreckt, und dass sich der zweite gekröpfte Befestigungswulst des ersten Justierglieds parallel und in einer Richtung entlang der Trittstufenmodul-Vorderkante erstreckt. Auch diese Ausgestaltung kann eine in besonderem Maße mechanisch stabile Konstruktion der beteiligten Bauteilkomponenten bereitstellen, was die Lebensdauer des Systems erhöhen kann.

Nach einer weiteren Ausgestaltung einer mit der Erfindung vorgeschlagenen Baugruppe kann vorgesehen sein, dass das erste Justierglied die Dichtleiste ausbildet. In diesem Fall kann auf eine Ausbildung einer Aufnahmetasche am unteren Ende des ersten Justierglieds verzichtet werden. In jenem Falle, dass das erste Justierglied unmittelbar die Dichtleiste bildet, ist das Justierglied aus einem für eine Abdichtung geeigneten Material (insbesondere Gummi, Kunststoff oder Metall) zu fertigen. Auch kann ein metallischer Kern vorgesehen sein, der mit Kunststoff oder Gummi überzogen ist. Bei einer solchen Ausgestaltung (erstes Justierglied bildet die Dichtleiste) erstreckt sich das erste Justierglied parallel und in einer Richtung entlang der Trittstufenmodul-Vorderkante. Am oberen Ende des ersten Justierglieds kann ein Befestigungswulst zur Befestigung in einer Aufnahme am Trittstufenmodul ausgebildet sein.

Die Erfindung wird weiterhin anhand der nachfolgenden Figuren näher erläutert. Diese sind nur beispielhaft zu verstehen und sollen die Erfindung nicht beschränken.

Es zeigen:
- Fig. 1: eine perspektivische Ansicht eines Ausschnitts einer Trittstufenmodul-Vorderkannte eines Trittsystems samt Dichtleiste;
- Fig. 2: eine schematische Querschnittsansicht einer Trittstufen-Dichtungs-Baugruppe gemäß der Erfindung im assemblierten Zustand;
- Fig. 3: eine schematische Querschnittsansicht eines Trittstufenmoduls als Einzelteil einer erfindungsgemäßen Trittstufen-Dichtungs-Baugruppe nach Fig. 2;
- Fig. 4: eine schematische Querschnittsansicht eines ersten Justierglieds als Einzelteil einer erfindungsgemäßen Trittstufen-Dichtungs-Baugruppe nach Fig. 2;
- Fig. 5: eine schematische Querschnittsansicht eines zweiten Justierglieds als Einzelteil einer erfindungsgemäßen Trittstufen-Dichtungs-Baugruppe nach Fig. 2;

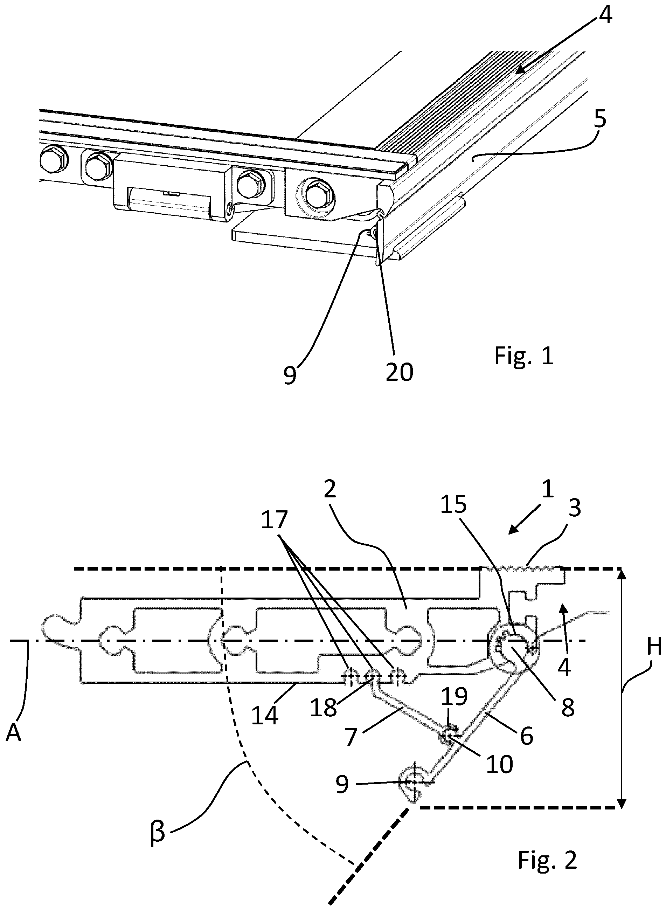

In der Fig. 2 ist die der Erfindung zugrunde liegende modulare Trittstufen-Dichtungs-Baugruppe 1 in einer Querschnittsansicht im assemblierten Zustand illustriert. Die Baugruppe 1 findet in einem Fahrzeug, insbesondere einem Schienenfahrzeug, als sogenannte Zustieghilfe Verwendung. Die Baugruppe 1 umfasst - wie dargestellt - ein Trittstufenmodul 2, welches unter Einsatz einer nicht dargestellten Antriebseinheit entlang einer Bewegungsachse A von einer eingefahrenen Stellung in Richtung einer ausgefahrenen Stellung bewegbar ist und umgekehrt. Das Trittstufenmodul 2 weist eine Trittfläche 3 auf, die beim Ein- und Aussteigen von Fahrgästen trittbelastet wird. Die Trittfläche 3 erstreckt sich in einer parallel zur Bewegungsachse A ausgerichteten Trittflächenebene. Das Trittstufenmodul 2 weist an einem nach fahrzeugaußen gerichteten, vorderen Ende eine Trittstufenmodul-Vorderkante 4 auf.

Wie in Fig. 1 gezeigt, umfasst die Baugruppe zudem eine Dichtleiste 5, die an der Trittstufenmodul-Vorderkante 4 befestigt ist und sich entlang der Trittstufenmodul-Vorderkante 4 im Wesentlichen in einer Dichtleistenebene erstreckt, wobei die Dichtleiste 5 und das Trittstufenmodul 2 senkrecht zur Bewegungsachse A eine vertikale Baugruppenhöhe H festlegen (Fig. 2), und wobei die Dichtleiste 5 und Trittfläche 3 in einem Winkel β zueinander angeordnet sind.

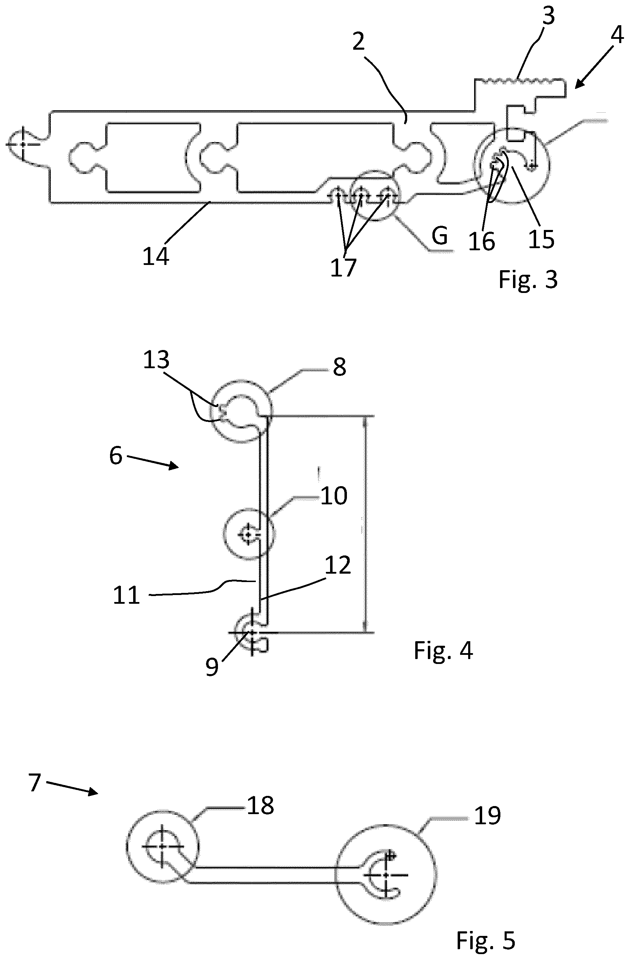

Die Baugruppenhöhe H sowie der Winkel β zwischen Dichtleiste 5 und Trittfläche 3 ist über eine Modulmechanik einstellbar. Die erwähnte Modulmechanik umfasst ein erstes Justierglied 6 und ein zweites Justierglied 7. Das erste Justierglied 6 weist an einem ersten Ende einen ersten gekröpften Befestigungswulst 8 und an einem dem ersten Ende gegenüberliegenden zweiten Ende eine Aufnahmetasche 9 auf, wobei zwischen dem ersten Ende und dem zweiten Ende ein zweiter gekröpfter Befestigungswulst 10 angeordnet ist. Im Detail ist dies nochmals in der Fig. 4 dargestellt. Der erste und zweite gekröpfte Befestigungswulst 8, 10 springen ausgehend von einer ersten Seite 11 des ersten Justierglieds 6 vor. Die Aufnahmetasche 9 springt ebenfalls ausgehend von der ersten Seite 11 vor. Ferner ist die Aufnahmetasche 9 in Richtung einer der ersten Seite 11 gegenüberliegenden zweiten Seite 12 des ersten Justierglieds 6 zumindest teilweise geöffnet.

Wie insbesondere in Fig. 4 gut zu erkennen, sind an dem ersten gekröpften Befestigungswulst 8 zwei Rastnasen 13 ausgebildet. Fig. 3 zeigt, dass an einer der Trittflächenebene abgewandten Unterseite 14 des Trittstufenmoduls 2 eine erste Befestigungswulst-Aufnahme 15 ausgebildet ist, die zur Aufnahme des ersten gekröpften Befestigungswulstes 8 vorgesehen ist (Fig. 2), wobei die Aufnahme 15 drei Rastaufnahmen 16 zur Aufnahme der Rastnasen 13 aufweist, sodass das erste Justierglied 6 in Bezug zur ersten Befestigungswulst-Aufnahme 15 zwei Winkelstellungen einnehmen kann.

Wie in Fig. 3 dargestellt, ist beabstandet zur ersten Befestigungswulst-Aufnahme 15 in Richtung nach fahrzeuginnen eine Gruppe G von drei in Bezug zur Bewegungsachse A hintereinander angeordneten zweiten Befestigungswulst-Aufnahmen 17 ausgebildet.

Das zweite Justierglied 7 weist an einem ersten Ende einen wulstartigen Flansch 18 und einem dem ersten Ende gegenüberliegenden zweiten Ende einen Aufnahmeabschnitt 19 auf (Fig. 5). Der wulstartige Flansch 18 des zweiten Justierglieds 7 ist in einer der zweiten Befestigungswulst-Aufnahmen 17 unter Formschluss aufnehmbar (vgl. Fig. 2), wobei der zweite gekröpfte Befestigungswulst 10 des ersten Justierglieds 6 unter Formschluss im Aufnahmeabschnitt 19 des zweiten Justierglieds 7 aufnehmbar ist (ebenfalls Fig. 2). Die an dem ersten Justierglied 6 ausgebildete Aufnahmetasche 9 ist zur formschlüssigen Aufnahme eines an der Dichtleiste 5 ausgebildeten Dichtleisten-Wulstes 20 ausgebildet, was in Fig. 2 exemplarisch illustriert ist.

Wird auf das zweite Justierglied 7 verzichtet, so kann das erste Justierglied 6 in einem Winkel von circa oder genau 90° zur Trittfläche 3 angeordnet sein. Durch Vorsehen eines zweiten Justierglieds 7 kann durch Anordnung des wulstartigen Flansches 18 in einer der zweiten Befestigungswulst-Aufnahmen 17 sowie Anordnen des zweiten gekröpften Befestigungswulstes 10 in dem Aufnahmeabschnitt 19 ein von einer senkrechten Stellung des ersten Justierglieds 6 zur Trittfläche 3 abweichender Winkel β eingestellt werden. Je nachdem in welcher der zweiten Befestigungswulst-Aufnahmen 17 der wulstartige Flansch 18 festgelegt wird, können unterschiedliche Winkel β eingestellt werden. Ferner können durch die Mehrzahl der zweiten Befestigungswulst-Aufnahmen 17 unterschiedliche Längen des ersten und/oder zweiten Justierglieds 6, 7 vorgesehen werden. Die Freiheitsgerade zur Höhen- und Winkeleinstellung werden dadurch erhöht.

### Bezugszeichenliste

- 1: Trittstufen-Dichtungs-Baugruppe
- 2: Trittstufenmodul
- 3: Trittfläche
- 4: Trittstufenmodul-Vorderkante
- 5: Dichtleiste
- 6: erstes Justierglied
- 7: zweites Justierglied
- 8: erster gekröpfter Befestigungswulst
- 9: Aufnahmetasche
- 10: zweiter gekröpfter Befestigungswulst
- 11: erste Seite
- 12: zweite Seite
- 13: Rastnase
- 14: Unterseite
- 15: erste Befestigungswulst-Aufnahme
- 16: Rastaufnahme
- 17: zweite Befestigungswulst-Aufnahme
- 18: wulstartiger Flansch
- 19: Aufnahmeabschnitt
- 20: Dichtleisten-Wulst

- A: Bewegungsachse
- G: Gruppe
- H: Baugruppenhöhe
- β: Winkel

## Patentansprüche

1. Modulare Trittstufen-Dichtungs-Baugruppe (1) für ein in einem Fahrzeug, insbesondere Schienenfahrzeug, implementiertes Trittsystem, umfassend
- ein Trittstufenmodul (2), welches unter Einsatz einer Antriebseinheit entlang einer Bewegungsachse (A) von einer eingefahrenen Stellung in Richtung einer ausgefahrenen Stellung bewegbar ist und umgekehrt, wobei das Trittstufenmodul (2) eine Trittfläche (3) aufweist, die sich in einer parallel zur Bewegungsachse (A) ausgerichteten Trittflächenebene erstreckt, und wobei das Trittstufenmodul (2) an einem nach fahrzeugaußen gerichteten, vorderen Ende eine Trittstufenmodul-Vorderkante (4) aufweist,
- eine Dichtleiste (5), die an der Trittstufenmodul-Vorderkante (4) befestigt ist und sich entlang der Trittstufenmodul-Vorderkante (4) im Wesentlichen in einer Dichtleistenebene erstreckt, wobei die Dichtleiste (5) und das Trittstufenmodul (2) senkrecht zur Bewegungsachse (A) eine vertikale Baugruppenhöhe (H) festlegen, und wobei die Dichtleiste (5) und Trittfläche (3) in einem Winkel (β) zueinander angeordnet sind,
**dadurch gekennzeichnet, dass** die Baugruppenhöhe (H) sowie der Winkel (β) zwischen Dichtleiste (5) und Trittfläche (3) über eine Modulmechanik einstellbar ist.

2. Baugruppe nach Anspruch 1, **dadurch gekennzeichnet, dass** die Modulmechanik ein erstes Justierglied (6) und ein zweites Justierglied (7) umfasst, wobei optional das erste Justierglied (6) die Dichtleiste (5) ausbildet.

3. Baugruppe nach Anspruch 2, **dadurch gekennzeichnet, dass** das erste Justierglied (6) an einem ersten Ende einen ersten gekröpften Befestigungswulst (8) und an einem dem ersten Ende gegenüberliegenden zweiten Ende eine Aufnahmetasche (9) aufweist, wobei zwischen dem ersten Ende und dem zweiten Ende ein zweiter gekröpfter Befestigungswulst (10) angeordnet ist.

4. Baugruppe nach Anspruch 3, **dadurch gekennzeichnet, dass** der erste und zweite gekröpfte Befestigungswulst (8, 10) ausgehend von einer ersten Seite (11) des ersten Justierglieds (6) vorspringen, dass die Aufnahmetasche (9) ebenfalls ausgehend von der ersten Seite (11) vorspringt, und dass die Aufnahmetasche (9) in Richtung einer der ersten Seite (11) gegenüberliegenden zweiten Seite (12) des ersten Justierglieds (6) zumindest teilweise geöffnet ist.

5. Baugruppe nach Anspruch 4, **dadurch gekennzeichnet, dass** an dem ersten gekröpften Befestigungswulst (8) eine Mehrzahl von Rastnasen (13), insbesondere zwei Rastnasen (13), ausgebildet sind.

6. Baugruppe nach einem der Ansprüche 2 bis 5, **dadurch gekennzeichnet, dass** an einer der Trittflächenebene abgewandten Unterseite (14) des Trittstufenmoduls (2) eine erste Befestigungswulst-Aufnahme (15) zur Aufnahme des ersten gekröpften Befestigungswulstes (8) ausgebildet ist, wobei die Aufnahme (15) eine Mehrzahl von Rastaufnahmen (16), insbesondere drei Rastaufnahmen (16), zur Aufnahme der Mehrzahl von Rastnasen (13), insbesondere zwei Rastnasen (13) aufweist, sodass das erste Justierglied (6) in Bezug zur ersten Befestigungswulst-Aufnahme (15) eine Mehrzahl von Winkelstellungen, insbesondere zwei Winkelstellungen, einnehmen kann.

7. Baugruppe nach Anspruch 6, **dadurch gekennzeichnet, dass** beabstandet zur ersten Befestigungswulst-Aufnahme (15), insbesondere in Richtung nach fahrzeuginnen, eine Gruppe (G) von in Bezug zur Bewegungsachse (A) hintereinander angeordneten zweiten Befestigungswulst-Aufnahmen (17), insbesondere drei zweiten Befestigungswulst-Aufnahmen (17), ausgebildet ist.

8. Baugruppe nach einem der Ansprüche 2 bis 7, **dadurch gekennzeichnet, dass** das zweite Justierglied (7) an einem ersten Ende einen wulstartigen Flansch (18) und einem dem ersten Ende gegenüberliegenden zweiten Ende einen Aufnahmeabschnitt (19) aufweist.

9. Baugruppe nach Anspruch 8, **dadurch gekennzeichnet, dass** der wulstartige Flansch (18) des zweiten Justierglieds (7) in einer der zweiten Befestigungswulst-Aufnahmen (17) unter Formschluss aufnehmbar ist, wobei der zweite gekröpfte Befestigungswulst (10) des ersten Justierglieds (6) unter Formschluss im Aufnahmeabschnitt (19) des zweiten Justierglieds (7) aufnehmbar ist.

10. Baugruppe nach Anspruch 3 oder 4, **dadurch gekennzeichnet, dass** die an dem ersten Justierglied (6) ausgebildete Aufnahmetasche (9) zur formschlüssigen Aufnahme eines an der Dichtleiste (5) ausgebildeten Dichtleisten-Wulstes (20) ausgebildet ist.

11. Baugruppe nach einem der Ansprüche 2 bis 10, **dadurch gekennzeichnet, dass** das erste und/oder zweite Justierglied (6, 7) nach Art eines Gestänges ausgebildet ist.

12. Baugruppe nach einem der Ansprüche 2 bis 11, **dadurch gekennzeichnet, dass** sich das erste und/oder zweite Justierglied (6, 7) parallel und entlang der Dichtleiste (5) erstrecken.

13. Baugruppe nach Anspruch 12 und zumindest Anspruch 6, **dadurch gekennzeichnet, dass** die erste Befestigungswulst-Aufnahme (15) in Form einer Aufnahme-Nut ausgebildet ist, die sich parallel und in einer Richtung entlang der Trittstufenmodul-Vorderkante (4) erstreckt, und dass sich der erste gekröpfte Befestigungswulst (8) des ersten Justierglieds (6) parallel und in einer Richtung entlang der Trittstufenmodul-Vorderkante (4) erstreckt.

14. Baugruppe nach Anspruch 12 und zumindest Anspruch 7, **dadurch gekennzeichnet, dass** die zweiten Befestigungswulst-Aufnahmen (17) jeweils in Form Aufnahme-Nuten ausgebildet sind, die sich parallel und in einer Richtung entlang der Trittstufenmodul-Vorderkante (4) erstrecken, und dass sich der wulstartige Flansch (18) des zweiten Justierglieds (7) parallel und in einer Richtung entlang der Trittstufenmodul-Vorderkante (4) erstreckt.

15. Baugruppe nach Anspruch 12 und zumindest Anspruch 3, **dadurch gekennzeichnet, dass** die Aufnahmetasche (9) des ersten Justierglieds (6) in Form einer Aufnahme-Nut ausgebildet ist, die sich parallel und in einer Richtung entlang der Trittstufenmodul-Vorderkante (4) erstreckt, und dass sich der Dichtleisten-Wulst (20) parallel und in einer Richtung entlang der Trittstufenmodul-Vorderkante (4) erstreckt.

16. Baugruppe nach Anspruch 12, zumindest Anspruch 8 und zumindest Anspruch 3, **dadurch gekennzeichnet, dass** der Aufnahmeabschnitt (19) des zweiten Justierglieds (7) in Form einer Aufnahme-Nut ausgebildet ist, die sich parallel und in einer Richtung entlang der Trittstufenmodul-Vorderkante (4) erstreckt, und dass sich der zweite gekröpfte Befestigungswulst (10) des ersten Justierglieds (6) parallel und in einer Richtung entlang der Trittstufenmodul-Vorderkante (4) erstreckt.

## Claims

1. A modular step seal assembly (1) for a step system implemented in a vehicle, in particular rail vehicle, comprising
- a step module (2), which, using a drive unit, can be moved along a movement axis (A) from a retracted position in the direction of an extended position and vice versa, wherein the step module (2) has a step surface (3), which extends in a step surface plane oriented parallel to the movement axis (A), and wherein the step module (2) has a step module front edge (4) on a front end directed towards the vehicle exterior,
- a sealing strip (5), which is fastened to the step module front edge (4) and which extends along the step module front edge (4) essentially in a sealing strip plane, wherein the sealing strip (5) and the step module (2) define a vertical assembly height (H) perpendicularly to the movement axis (A), and wherein the sealing strip (5) and step surface (3) are arranged at an angle (β) to one another,
**characterized in that** the assembly height (H) as well as the angle (β) between sealing strip (5) and step surface (3) can be set via a modular mechanism.

2. The assembly according to claim 1, **characterized in that** the modular mechanism comprises a first adjusting member (6) and a second adjusting member (7), wherein the first adjusting member (6) optionally forms the sealing strip (5).

3. The assembly according to claim 2, **characterized in that** the first adjusting member (6) has a first cranked fastening bead (8) on a first end and a receiving pocket (9) on a second end lying opposite the first end, wherein a second cranked fastening bead (10) is arranged between the first end and the second end.

4. The assembly according to claim 3, **characterized in that** the first and second cranked fastening bead (8, 10) protrude starting from a first side (11) of the first adjusting member (6), that the receiving pocket (9) likewise protrudes starting from the first side (11), and that the receiving pocket (9) is at least partly open in the direction of a second side (12) of the first adjusting member (6) lying opposite the first side (11).

5. The assembly according to claim 4, **characterized in that** a plurality of latching lugs (13), in particular two latching lugs (13), are formed on the first cranked fastening bead (8).

6. The assembly according to one of claims 2 to 5, **characterized in that** a first fastening bead receptacle (15) for receiving the first cranked fastening bead (8) is formed on an underside (14) of the step module (2) facing away from the step surface plane, wherein the receptacle (15) has a plurality of latching receptacles (16), in particular three latching receptacles (16), for receiving the plurality of latching lugs (13), in particular two latching lugs (13), so that the first adjusting member (6) can take up a plurality of angular positions, in particular two angular positions, with respect to the first fastening bead receptacle (15).

7. The assembly according to claim 6, **characterized in that** spaced apart from the first fastening bead receptacle (15), in particular in the direction towards the vehicle interior, a group (G) of second fastening bead receptacles (17), in particular three second fastening bead receptacles (17), is formed, which are arranged one behind the other with respect to the movement axis (A).

8. The assembly according to one of claims 2 to 7, **characterized in that** the second adjusting member (7) has a bead-like flange (18) on a first end and a receiving section (19) on a second end lying opposite the first end.

9. The assembly group according to claim 8, **characterized in that** the bead-like flange (18) of the second adjusting member (7) can be received by means of a positive connection in one of the second fastening bead receptacles (17), wherein the second cranked fastening bead (10) of the first adjusting member (6) can be received by means of a positive connection in the receiving section (19) of the second adjusting member (7).

10. The assembly according to claim 3 or 4, **characterized in that** the receiving pocket (9) formed on the first adjusting member (6) is formed for receiving a sealing strip bead (20) formed on the sealing strip (5) in a positive manner.

11. The assembly according to one of claims 2 to 10, **characterized in that** the first and/or second adjusting member (6, 7) is formed in the manner of a linkage.

12. The assembly according to one of claims 2 to 11, **characterized in that** the first and/or second adjusting member (6, 7) extend parallel to and along the sealing strip (5).

13. The assembly according to claim 12 and at least claim 6, **characterized in that** the first fastening bead receptacle (15) is formed in the form of a receiving groove, which extends parallel to and in a direction along the step module front edge (4), and that the first cranked fastening bead (8) of the first adjusting member (6) extends parallel to and in a direction along the step module front edge (4).

14. The assembly according to claim 12 and at least claim 7, **characterized in that** the second fastening bead receptacles (17) are each formed in the form of receiving grooves, which extend parallel to and in a direction along the step module front edge (4), and that the bead-like flange (18) of the second adjusting member (7) extends parallel to and in a direction along the step module front edge (4).

15. The assembly according to claim 12 and at least claim 3, **characterized in that** the receiving pocket (9) of the first adjusting member (6) is formed in the form of a receiving groove, which extends parallel to and in a direction along the step module front edge (4), and that the sealing strip bead (20) extends parallel to and in a direction along the step module front edge (4).

16. The assembly according to claim 12, at least claim 8 and at least claim 3, **characterized in that** the receiving section (19) of the second adjusting member (7) is formed in the form of a receiving groove, which extends parallel to and in a direction along the step module front edge (4), and that the second cranked fastening bead (10) of the first adjusting member (6) extends parallel to and in a direction along the step module front edge (4).

## Revendications

1. Ensemble modulaire de marche et de joints (1) destiné à un système de marche implémenté dans un véhicule, notamment un véhicule ferroviaire, comprenant
- un module (2) de marche, qui en utilisant une unité d'entraînement est déplaçable le long d'un axe de déplacement (A), d'une position escamotée en direction d'une position déployée et inversement, le module (2) de marche comportant une surface (3) de marche qui s'étend dans un plan de marche orienté à la parallèle de l'axe de déplacement (A) et sur une extrémité antérieure dirigée vers l'extérieur du véhicule, le module (2) de marche comportant une arête antérieure (4) de module de marche,
- une baguette d'étanchéité (5), qui est fixée sur l'arête antérieure (4) de module de marche et qui s'étend le long de l'arête antérieure (4) de module de marche, sensiblement dans un plan de baguette d'étanchéité, la baguette d'étanchéité (5) et le module (2) de marche définissant à la perpendiculaire de l'axe de déplacement (A) une hauteur (H) verticale d'ensemble et la baguette d'étanchéité (5) et la surface (3) de marche étant placées l'une par rapport à l'autre sous un angle (β),
**caractérisé en ce que** la hauteur (H) d'ensemble ainsi que l'angle (β) entre la baguette d'étanchéité (5) et la surface (3) de marche sont réglables par l'intermédiaire d'un mécanisme de module.

2. Ensemble selon la revendication 1, **caractérisé en ce que** le mécanisme de module comprend un premier organe d'ajustage (6)et un deuxième organe d'ajustage (7), en option le premier organe d'ajustage (6) constituant la baguette d'étanchéité (5).

3. Ensemble selon la revendication 2, **caractérisé en ce que** le premier organe d'ajustage (6) comporte sur une première extrémité un premier bourrelet de fixation (8) coudé et sur une deuxième extrémité placée au vis-à-vis de la première extrémité un compartiment de logement (9), entre la première extrémité et la deuxième extrémité étant placé un deuxième bourrelet de fixation (10) coudé.

4. Ensemble selon la revendication 3, **caractérisé en ce que** le premier et le deuxième bourrelets de fixation (8, 10) coudés saillissent vers l'avant à partir d'un premier côté (11) du premier organe d'ajustage (6), **en ce que** le compartiment de logement (9) saillit également vers l'avant en partant du premier côté (11) et **en ce que** le compartiment de logement (9) est ouvert au moins en partie dans la direction d'un deuxième côté (12) du premier organe d'ajustage (6) placé au vis-à-vis du premier côté (11).

5. Ensemble selon la revendication 4, **caractérisé en ce que** sur le premier bourrelet de fixation (8) coudé est conçue une pluralité de becs d'encliquetage (13), sont conçus notamment deux becs d'encliquetage (13).

6. Ensemble selon l'une quelconque des revendications 2 à 5, **caractérisé en ce que** sur un côté inférieur (14) du module (2) de marche opposé au plan de marche est conçu un premier logement (15) de bourrelet de fixation, destiné à recevoir le premier bourrelet de fixation (8) coudé, le logement (15) comportant une pluralité de logements par encliquetage (16), notamment trois logements par encliquetage (16), destinés à recevoir la pluralité de becs d'encliquetage (13), notamment deux becs d'encliquetage (13), de sorte que le premier organe d'ajustage (6) puisse adopter par rapport au logement (15) de bourrelet de fixation une pluralité de positions angulaires, notamment deux positions angulaires.

7. Ensemble selon la revendication 6, **caractérisé en ce qu'**avec un écart par rapport au premier logement (15) de bourrelet de fixation, notamment en direction de l'intérieur du véhicule, est conçu un groupe (G) de deuxièmes logements (17) de bourrelets de fixation placés les uns derrière les autres par rapport à l'axe de déplacement (A), sont conçus notamment trois deuxièmes logements (17) de bourrelets de fixation.

8. Ensemble selon l'une quelconque des revendications 2 à 7, **caractérisé en ce que** le deuxième organe d'ajustage (7) comporte sur une première extrémité une bride (18) formant bourrelet et sur une deuxième extrémité placée au vis-à-vis de la première extrémité un segment de logement (19).

9. Ensemble selon la revendication 8, **caractérisé en ce que** la bride (18) formant bourrelet du deuxième organe d'ajustage (7) est susceptible d'être reçue par complémentarité de forme dans l'un des deuxièmes logements (17) de bourrelets de fixation, le deuxième bourrelet de fixation (10) coudé du premier organe d'ajustage (6) étant susceptible d'être reçu par complémentarité de forme dans le segment de logement (19) du deuxième organe d'ajustage (7).

10. Ensemble selon la revendication 3 ou 4, **caractérisé en ce que** le compartiment de logement (9) conçu sur le premier organe d'ajustage (6) est conçu pour recevoir par complémentarité de forme un bourrelet (20) de baguette d'étanchéité conçu sur la baguette d'étanchéité (5).

11. Ensemble selon l'une quelconque des revendications 2 à 10, **caractérisé en ce que** le premier et / ou le deuxième organe d'ajustage (6, 7) est conçu à la manière d'une tringle.

12. Ensemble selon l'une quelconque des revendications 2 à 11, **caractérisé en ce que** le premier et / ou le deuxième organe d'ajustage (6, 7) s'étendent à la parallèle et le long de la baguette d'étanchéité (5).

13. Ensemble selon la revendication 12 et selon au moins la revendication 6, **caractérisé en ce que** le premier logement (15) de bourrelet de fixation est conçu sous la forme d'une rainure de logement, qui s'étend à la parallèle et dans une direction le long de l'arête antérieure (4) de module de marche et **en ce que** le premier bourrelet de fixation (8) coudé du premier organe d'ajustage (6) s'étend à la parallèle et dans une direction le long de l'arête antérieure (4) de module de marche.

14. Ensemble selon la revendication 12 et selon au moins la revendication 7, **caractérisé en ce que** les deuxièmes logements (17) de bourrelets de fixation sont conçus chacun sous la forme de rainures de logement qui s'étendent à la parallèle et dans une direction le long de l'arête antérieure (4) de module de marche et **en ce que** la bride (18) formant bourrelet du deuxième organe d'ajustage (7) s'étend à la parallèle et dans une direction le long de l'arête antérieure (4) de module de marche.

15. Ensemble selon la revendication 12 et selon au moins la revendication 3, **caractérisé en ce que** le compartiment de logement (9) du premier organe d'ajustage (6) est conçu sous la forme d'une rainure de logement, qui s'étend à la parallèle et dans une direction le long de l'arête antérieure (4) de module de marche et **en ce que** le bourrelet (20) de la baguette d'étanchéité s'étend à la parallèle et dans une direction le long de l'arête antérieure (4) de module de marche.

16. Ensemble selon la revendication 12, selon au moins la revendication 8 et selon au moins la revendication 3, **caractérisé en ce que** le segment de logement (19) du deuxième organe d'ajustage (7) est conçu sous la forme d'une rainure de logement, qui s'étend à la parallèle et dans une direction le long de l'arête antérieure (4) de module de marche et **en ce que** le deuxième bourrelet de fixation (10) coudé du premier organe d'ajustage (6) s'étend à la parallèle et dans une direction le long de l'arête antérieure (4) de module de marche.
